# EUROPEAN PATENT SPECIFICATION

(11) **EP 0 499 022 B1**
(45) Date of publication and mention of the grant of the patent: **17.05.1995**
(21) Application number: 92100240.8
(22) Date of filing: 09.01.1992
(51) Int. Cl.: B41F 13/30, B41F 13/36, F16C 13/02

(54) **Processing device for processing continuous webs**
Vorrichtung zur Verarbeitung einer Materialbahn
Dispositif de traitement de bandes continues

(30) Priority: 14.01.1991 SE 9100111
(43) Date of publication of application: 19.08.1992
(73) Proprietor: ROLF LARSSONS MEKANISK VERKSTAD AB, S-690 70 Palsboda (SE)
(72) Inventor: Larsson, Rolf Arne, S-69070 Palsboda (SE); Larsson, Rolf Peter Mikael, S-69070 Palsboda (SE)
(74) Representative: Rottmann, Maximilian R.

(56) References cited:
- DE-A- 1 625 490

## Description

The present invention relates to a processing device for processing continuous webs, said processing device being adapted for use in printing presses or other processing machines for cutting and/or perforating and/or punching and/or printing the continuous web, whereby said processing device comprises a processing cylinder and a counter pressure cylinder cooperating therewith, whereby one of the cylinders is movable relative to the other cylinder for being set in different positions relative to said other cylinder and whereby the movable cylinder is mounted in bearing elements which are displaceable by means of a displacing system, preferably a compressed-air system.

There are many different displacing systems for displacing one cylinder relative to the other in processing devices of the above type. One of these prior art displacing systems is described in US-A-3 894 488 and comprises a wedge means which is moved back and forth for adjusting the mutual positions of the cylinders. When the wedge means is moved to any desired position, it is locked therein by means of a lock system. For being able to lock said wedge means in its various positions, the lock system is structurally very complex and expensive and the risk for quick wear is great.

The object of the present invention is to eliminate this problem and provide a simple and very effective lock system at devices of the above type. This is arrived at by means of the characterizing features of claim 1.

The most essential advantage with the wedge system of the invention is that the bearing elements for the movable cylinder are easily moved to desired positions preferably by means of a compressed-air system and when they have reached their desired positions, they are effectively wedged therein. Such a wedge-system like lock device is quickly operable with simple means, it has a simple and reliable construction, it is self-adjusting when worn and has therefore a long useful life.

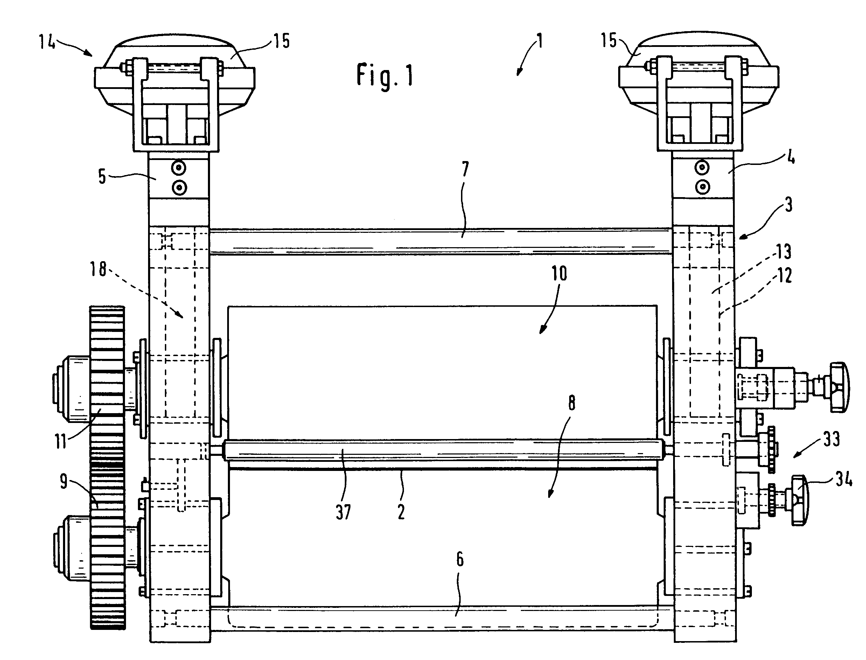

The invention will be further described below with reference to the accompanying drawings, in which
fig. 1 is a front view of a processing device according to the invention;

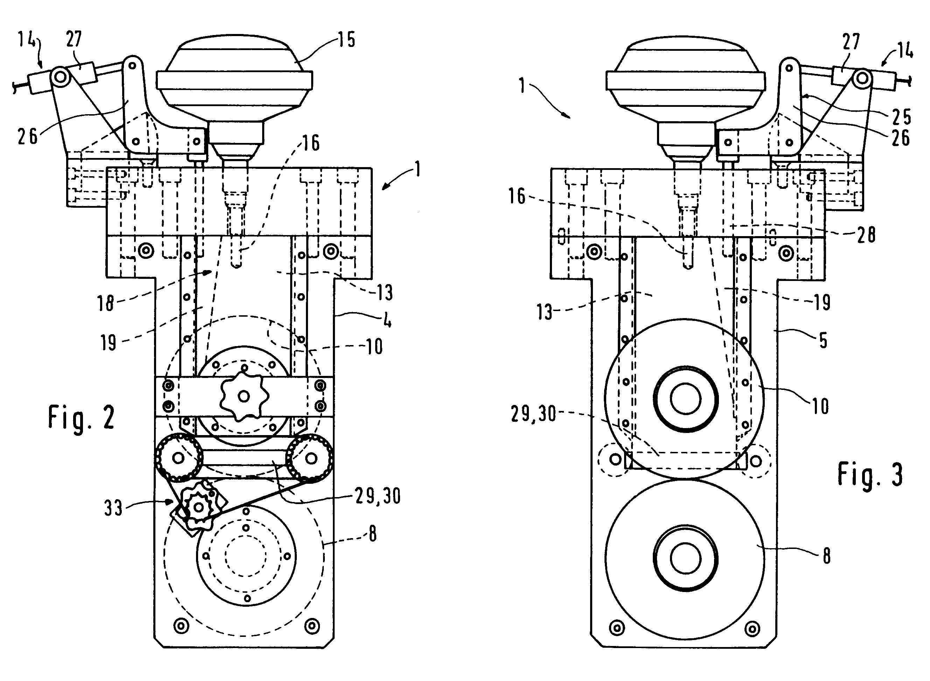

fig. 2 illustrates an end side of the processing device according to fig. 1;
fig. 3 illustrates the other end side of the processing device of fig. 1;
fig. 4 schematically illustrates a wedge system in operating position, said wedge system forming part of the processing device of fig. 1;
fig. 5 illustrates the wedge system of fig. 4 during a releasing phase;

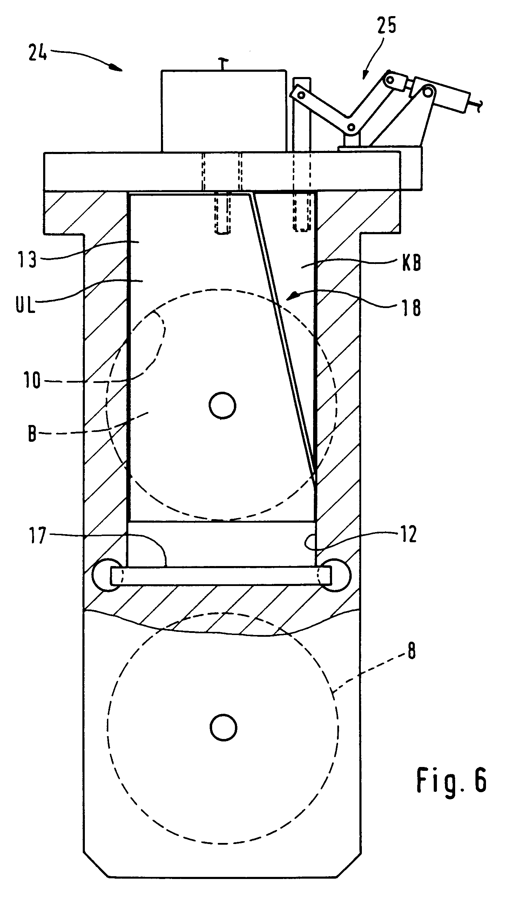

fig. 6 illustrates the wedge system of fig. 4 set in a free or rest position;

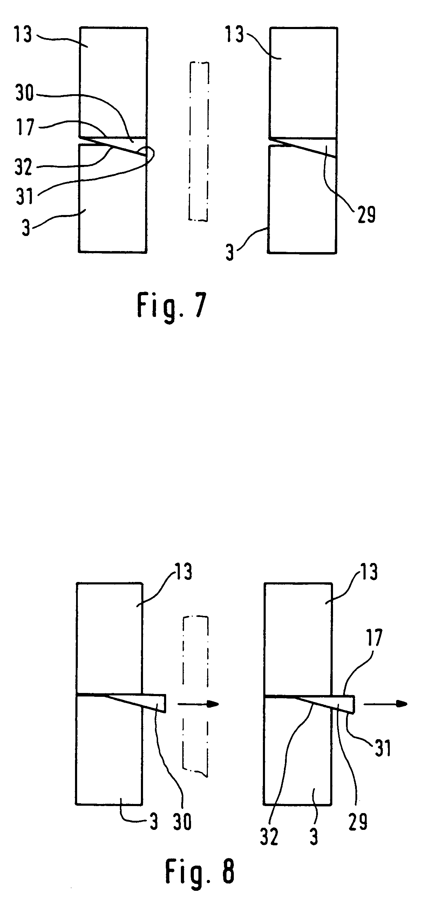

fig. 7 schematically illustrates, with a side view support elements forming part of the processing device, in a supporting position;
fig. 8 shows the support elements of fig. 7 in another supporting position; and

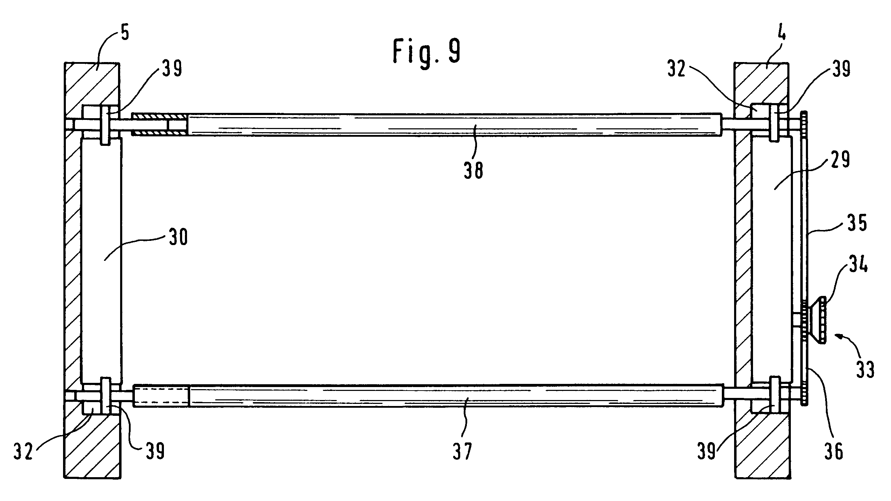

fig. 9 finally, is a plan view of the supporting elements of figs. 7 and 8 and a coupling device therefor.

The drawings illustrate a processing device 1 for processing continuous webs 2 such as paper webs, plastic webs or other types of webs. The processing device 1 is preferably intended for use at printing presses or other processing machines for cutting and/or perforating and/or punching and/or printing of the continuous web 2.

The processing device 1 comprises a frame 3 with two frame end members 4 and 5 which are connected to each other through upper and lower connecting axes 6 and 7. Between the frame end members 4, 5 there is provided a counter pressure cylinder 8 which is rotatably mounted in said end members 4, 5 and which preferably has a drive gear 9. Between the frame end members 4, 5 and above the counter pressure cylinder 8 there is provided a processing cylinder 10 which is equipped for relevant processing of the continuous running web 2 and which preferably also includes a drive gear 11. Both cylinders 8, 10 are rotated by means of a driving device (not shown) via the drive gears 9, 11.

The processing cylinder 10 is rotatably mounted in two bearing elements 13, of which one is displaceably mounted in an opening 12 in one frame end member 4 and the other in an opening 12 in the other frame end member 5 in such a way that the processing cylinder 10 can be displaced in vertical direction relative to the counter pressure cylinder 8. The displacement of the bearing elements 13 and thus, of the processing cylinder 10 is accomplished preferably by means of a compressed-air system 14, which can include a double-acting compressed-air box 15. Such a compressed-air box 15 can be provided on each frame end member 4, 5 and it can include a plunger or piston means 16 which is mounted on top of the bearing element 13 and adapted for displacement thereof.

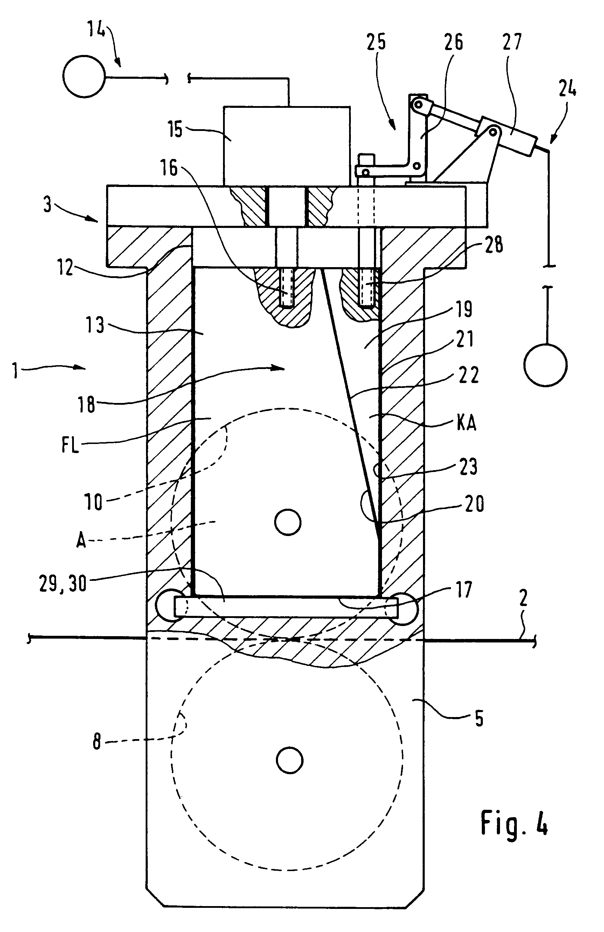

Each bearing element 13 is adapted for displacement to a position FL (see fig. 4) at which the lower edge thereof engages support surfaces 17. In this position, the bearing elements 13 retain the processing cylinder 10 in such an operating position A relative to the counter pressure cylinder 8, that appropriate processing of the web 2 running between said cylinders 8, 10 is carried out.

In order to ensure that said bearing elements 13 are firmly retained in their operating positions FL and thereby, the processing cylinder 10 in its operating position A, to permit quick release of said bearing elements for movement out of said operating positions FL and thereby, movement of said processing cylinder out of said operating position A, and for being able to carry out these measures without wearing bearing members that are difficult to repair, the processing device 1 comprises a wedge system 18 which is provided to wedge up the processing cylinder 10 in its operating position A by wedging up the bearing elements 13 in their operating positions FL.

The wedge system 18 includes a wedge 19 for each bearing element 13 and each such wedge is preferably located between an inclined surface 20 on the bearing element, approaching one side 21 of the opening 12 as seen towards the support surfaces 17, and said side or surface 21 of said opening. Furthermore, the wedge 19 has such a shape that it with one wedge surface 22 can engage in inclined surface 20 of the bearing element 13, while an opposite wedge surface 23 engages said side 21 of the opening 12.

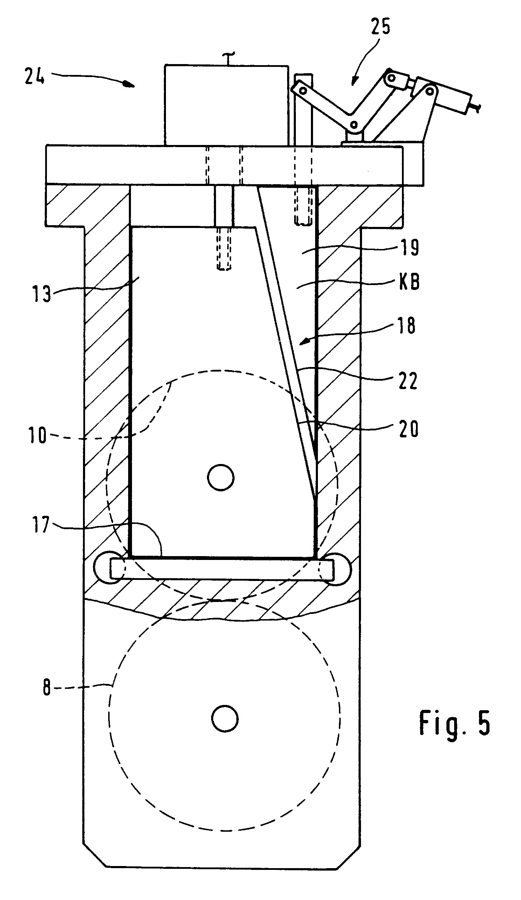

The wedges 19 or corresponding elements of the wedge system 18 are preferably operable by means of a compressed-air system 24 for moving the wedge 19 to its wedge position KA, whereby it presses the bearing element 13 against the support surfaces 17 and wedge up said element in said operating position FL with a large force. The compressed-air system 24 is also adapted to move the wedge 19 from its wedge position KA to a free or rest position KB by pulling it up a small distance (see fig. 5). In this rest position KB, the wedge 19 has released the bearing element such that it can be pulled up to a free or rest position UL by the compressed-air system 14 and thereby, the processing cylinder 10 is pulled up to a free or rest position B relative to the counter pressure cylinder 8.

The compressed-air system 24 preferably cooperates with a lever system 25 on each frame end member 4, 5. Each such lever consists of a pivotally mounted angled arm 26, of which one end portion is articulately connected to a piston and cylinder unit 27 forming part of the compressed-air system 24 while the other end portion is articulately connected to a rod 28, which in turn is provided on the wedge 19. By activating the piston and cylinder unit 27, the angled arm 26 is pivoted and the movement of said arm transferred to the wedge 19, whereby an advantageous lever effect is obtained.

Under certain circumstances, it can be necessary to adjust the operating position A of the processing cylinder 10 relative to the counter pressure cylinder 8, e.g. for punching operations. This is done at the embodiment shown by moving the support surfaces 17 towards or from the counter pressure cyliner 8. The support surfaces 17 are defined preferably by movable support elements 29, 30 in the shape of wedges, which with lower wedge surfaces 31 engage frame surfaces 32 that are inclined relative to the counter pressure cylinder 8 in such a way that the support surfaces 17 of the support elements 29, 30 move towards or from said counter pressure cylinder 8 when said support elements are moved along the frame surfaces 32. This movement of the support elements 29, 30 can be carried out manually by means of an adjusting device 33. This device is preferably operated by turning a steering wheel 34, the rotary motions of which are transferred to adjusting axes 37, 38 through chain transmissions 35, 36. Said axes 37, 38 cooperate with the support elements 29, 30 through followers 39 in such a way that said followers move said support elements along the frame surfaces 32 when the adjusting axes 37, 38 are simultaneously turned by means of the steering wheel 34 through the chain transmissions 35, 36.

In order to ensure that both support elements 29, 30 are moved the same distance along the frame surfaces 32 during the adjusting operation, the adjusting axes 37, 38 cooperate with both support elements 29, 30.

The invention is not limited to the embodiment described above and shown in the drawings, but may vary within the scope of the following claims with regard to its construction and function. Thus, the wedge system 18 can be designed otherwise than shown and still provide the required wedge-up effect. The wedge system 18 can be operable in other ways than by a compressed-air system 24. The processing cylinder 10 can be journalled in other types of bearing elements than shown and the support surfaces 17 can be defined by other support elements, and the adjusting device 33 can be constructed in other ways. Furthermore, the counter pressure cylinder 8 can eventually be movable relative to the processing cylinder 10 instead of the opposite and it is eventually possible to make both cylinders 8, 10 movable relative to each other. It is also possible to mount the cylinders 8, 10 in another way relative to each other than shown. Furthermore, the bearing elements 13 can be moved by means of another system than a compressed-air system and the processing device can be used at other types of machines than the abovementioned.

## Claims

1. Processing device for processing continuous webs, said processing device being adapted for use in printing presses or other processing machines for cutting and/or perforating and/or punching and/or printing the continuous web,
whereby said processing device (1) comprises a processing cylinder (10) and a counter pressure cylinder (8) cooperating therewith,
whereby one of the cylinders (10 or 8) is movable relative to the other cylinder (8 or 10) for being set in different positions (A or B) relative to said other cylinder, and
whereby the movable cylinder (10 or 8) is mounted in bearing elements (13) which are displaceable by means of a displacing system (14, 15), preferably a compressed-air system,
**characterized in**
that the processing device (1) further comprises a wedge system (18) which is provided to wedge up the bearing elements (13) when said elements have been displaced by the displacing system (14, 15) such that the movable cylinder (10 or 8) is situated in the desired position (A) relative to the other cylinder (8 or 10).

2. Processing device according to claim 1, **characterized in** that the wedge system (18) is operable by means of a compressed-air system (24) either to wedge up the movable cylinder (10 or 8) in the desired position (A) relative to the other cylinder (8 or 10) or to release said movable cylinder such that it can be moved relative to said other cylinder.

3. Processing device according to claim 1 or 2, **characterized in** that the movable cylinder (10 or 8) is movable relative to the other cylinder (8 or 10) by means of a compressed-air system (14).

4. Processing device according to any preceding claim, **characterized in** that the movable cylinder (10 or 8) is journalled in two bearing elements (13) which are displaceably mounted in a frame (3) for being able to move said movable cylinder relative to the other cylinder (8 or 10), that said displaceable bearing elements are engageable with support surfaces (17), whereby said bearing elements retains the movable cylinder (10 or 8) in an operating position (FL) relative to said other cylinder (8 or 10) and that the wedge system (18) is provided to wedge up the bearing elements (13) relative to the frame (3) when said bearing elements engage said support surfaces (17).

5. Processing device according to claim 4, **characterized in** that the wedge system (18) includes at least one wedge (19) which is insertable between a bearing element (13) and the frame (3) and which is displaceable towards the support surfaces (17) such that the wedge can be brought to press the bearing element against said support surfaces and wedge up said bearing element in this position (FL).

6. Processing device according to claim 4 or 5, **characterized in** that the frame (3) has an opening (12) for each bearing element (13) in which opening said bearing element is movable and that the wedge (19) is located in this opening with a wedge surface (23) engaging a side or surface (21) of said opening and another wedge surface (22) engaging the bearing element (13).

7. Processing device according to anyone of claims 4-6, **characterized in** that the operating position (A) of the movable cylinder (10 or 8) relative to the other cylinder (8 or 10) is adjustable by moving the support surfaces (17) for the bearing element (13) towards or from said other cylinder.

8. Processing device according to claim 7, **characterized in** that the support surfaces (17) are defined by one or more movable support elements (29, 30) shaped as wedges which with wedge surfaces (31) engage frame surfaces (32) that are inclined relative to one cylinder (10 or 8) such that the support surfaces (17) defined by the support elements (29, 30) for the bearing element (13) moves towards or from the other cylinder (8 or 10) when said support elements are moved along the frame surfaces (32).

9. Processing device according to claim 7 or 8, **characterized in** that a support element (29) for a bearing element (13) and a support element (30) for another bearing element (13) are movable simultanuously by means of adjusting axes (37, 38) and the same distances along the frame surfaces (32).

10. Processing device according to claim 2, **characterized in** that the compressed-air system (24) cooperates through a lever system (25) with a wedge (19) forming part of the wedge system (18) such that said lever system with force can press said wedge to a wedge position (KA) and pull it out of said wedge position.

## Patentansprüche

1. Verarbeitungsvorrichtung zur Verarbeitung von endlosem Bahnmaterial, welche geeignet ist für die Verwendung bei Druckmaschinen oder anderen Verarbeitungsmaschinen für das Schneiden und/oder Perforieren und/oder Stanzen und/oder Bedrucken des endlosen Bahnmaterials,
wobei die genannte Verabeitungsvorrichtung (1) einen Bearbeitungszylinder (10) und einen damit zusammenarbeitenden Gegendruckzylinder (8) aufweist,
wobei einer der Zylinder (10 oder 8) relativ zum anderen Zylinder (8 oder 10) beweglich ist, um in verschiedene Position (A oder B) relativ zum genannten anderen Zylinder eingestellt zu werden, und
wobei der bewegliche Zylinder (10 oder 8) in Lagerelementen (13) angeordnet ist, welche mittels eines Verschiebesystems (14, 15), vorzugsweise eines Druckluft-Systems, verschiebbar sind,
**dadurch gekennzeichnet, dass**
die Verarbeitungsvorrichtung des weiteren ein Keilsystem (18) aufweist, das dazu vorgesehen ist, die Lagerelemente (13) festzuklemmen, wenn die genannten Elemente durch das Verschiebesystem (14, 15) verschoben worden sind, derart, dass der bewegliche Zylinder (10 oder 8) in der gewünschten Position (A) relativ zum anderen Zylinder (8 oder 10) gelegen ist.

2. Verarbeitungsvorrichtung nach Anspruch 1, **dadurch gekennzeichnet,** dass das Keilsystem (18) mit Hilfe eines Druckluft-Systems (24) betätigbar ist, entweder um den beweglichen Zylinder (10 oder 8) in der gewünschten Lage (A) relativ zum anderen Zylinder (8 oder 10) festzuklemmen oder diesen beweglichen Zylinder freizugeben, so dass er relativ zum genannten anderen Zylinder beweglich ist.

3. Verarbeitungseinrichtung nach Anspruch 1 oder 2, **dadurch gekennzeichnet,** dass der bewegliche Zylinder (10 oder 8) relativ zum anderen Zylinder (8 oder 10) mittels eines Druckluft-Systems (14) beweglich ist.

4. Verarbeitungseinrichtung nach einem der vorangehenden Ansprüche, **dadurch gekennzeichnet,** dass der bewegliche Zylinder (10 oder 8) in zwei Lagerelementen (13) aufgenommen ist, welche verschiebbar in einem Rahmen (3) derart aufgenommen sind, dass sie in der Lage sind, den genannten beweglichen Zylinder relativ zum anderen Zylinder (8 oder 10) zu bewegen, dass die genannten verschiebbaren Lagerelemente mit Anlageflächen (17) in Eingriff bringbar sind, wobei die genannten Lagerelemente den beweglichen Zylinder (10 oder 8) in einer Arbeitslage (FL) gegenüber dem genannten anderen Zylinder (8 oder 10) halten, und dass das Keilsystem (18) dazu vorgesehen ist, die Lagerelemente (13) relativ zum Rahmen (3) festzuklemmen, wenn die genannten Lagerelemente mit den genannten Anlageflächen (17) in Eingriff sind.

5. Verarbeitungseinrichtung nach Anspruch 4, **dadurch gekennzeichnet,** dass das Keilsystem (18) mindestens einen Keil (19) umfasst der zwischen ein Lagerelement (13) und dem Rahmen (3) einführbar ist und der derart gegen die Anlagefläche (17) verschiebbar ist, dass der Keil dazu gebracht werden kann, das Lagerelement gegen die genannte Anlagefläche zu pressen und das genannte Lagerelement in dieser Position (FL) festzuklemmen.

6. Verarbeitungseinrichtung nach einem der Ansprüche 4 oder 5, **dadurch gekennzeichnet,** dass der Rahmen (3) für jedes Lagerelement (13) eine Öffnung (12) besitzt, in welcher Öffnung das Lagerelement verschiebbar ist, und dass der Keil (19) so in dieser Öffnung angeordnet ist, dass eine Keilfläche (23) mit einer Seite oder Oberfläche (21) der genannten Öffnung und eine andere Keilfläche (22) mit dem Lagerelement (13) in Eingriff ist.

7. Verarbeitungseinrichtung nach einem der Ansprüche 4-6, **dadurch gekennzeichnet,** dass die Arbeitslage (A) des beweglichen Zylinders (10 oder 8) relativ zum anderen Zylinder (8 oder 10) dadurch einstellbar ist, dass die Anlageflächen (17) für das Lagerelement (13) gegen den genannten anderen Zylinder oder von diesem weg bewegt werden.

8. Verarbeitungseinrichtung nach Anspruch 7, **dadurch gekennzeichnet,** dass die Anlageflächen (17) durch ein oder mehrere Stützelemente (29, 30) definiert sind, die als Keile ausgebildet sind, mit deren Keiloberflächen (31) Rahmenoberflächen (32) in Eingriff stehen, die gegenüber einem Zylinder (10 oder 8) geneigt sind, derart, dass die durch die Stützelemente (29, 30) definierten Anlageflächen (17) für die Lagerelemente (13) sich gegen den anderen Zylinder (8 oder 10) hin oder von diesem weg bewegen, wenn die genannten Stützelemente entlang der Rahmenoberflächen (32) bewegt werden.

9. Verarbeitungseinrichtung nach Anspruch 7 oder 8, **dadurch gekennzeichnet,** dass ein Stützelement (29) für ein Lagerelement (13) und ein Stützelement (30) für ein anderes Lagerelement (13) mit Hilfe von Einstellachsen (37, 38) gleichzeitig und über die gleiche Distanz entlang der Rahmenoberfläche (32) beweglich sind.

10. Verarbeitungseinrichtung nach Anspruch 2, **dadurch gekennzeichnet,** dass das Druckluft-System (24) über ein Hebelsystem (25) mit einem Keil (19) zusammenarbeitet, welcher Keil (19) Teil des Keilsystems (18) bildet, derart, dass das genannte Hebelsystem den genannten Keil mit Kraft in eine Klemmposition (KA) pressen und aus dieser Klemmposition herausziehen kann.

## Revendications

1. Dispositif de traitement pour le traitement de bandes continues, ledit dispositif de traitement étant prévu pour une utilisation dans des presses d'impression ou d'autres machines de traitement destinées à couper et/ou perforer et/ou poinçonner et/ou imprimer la bande continue,
dans lequel ledit dispositif de traitement (1) comprend un cylindre de traitement (10) et un cylindre de contre-pression (8) qui coopère avec ce dernier,
dans lequel un des cylindres (10 ou 8) est mobile par rapport à l'autre cylindre (8 ou 10) en vue de son réglage dans différentes positions (A ou B) par rapport audit autre cylindre, et
dans lequel le cylindre mobile (10 ou 8) est monté dans des éléments de portée (13) qui sont déplaçables au moyen d'un système de déplacement (14,15), de préférence un système pneumatique, caractérisé en ce que :
le dispositif de traitement (1) comprend en outre un système de coin (18) qui est prévu pour coincer les éléments de portée (13) lorsque les dits éléments ont été déplacés par le système de déplacement (14,15) d'une manière telle que le cylindre mobile (10 ou 8) se trouve dans la position désirée (A) par rapport à l'autre cylindre (8 ou 10).

2. Dispositif de traitement suivant la revendication 1, caractérisé en ce que le système de coin (18) est manoeuvrable au moyen d'un système pneumatique (24) pour coincer le cylindre mobile (10 ou 8) dans la position désirée (A) par rapport à l'autre cylindre (8 ou 10) ou pour libérer ledit cylindre mobile de sorte qu'on peut le déplacer par rapport audit autre cylindre.

3. Dispositif de traitement suivant la revendication 1 ou 2, caractérisé en ce que le cylindre mobile (10 ou 8) est déplaçable par rapport à l'autre cylindre (8 ou 10) au moyen d'un système à air comprimé (14).

4. Dispositif de traitement suivant une quelconque des revendications précédentes, caractérisé en ce que le cylindre mobile (10 ou 8) tourillonne dans deux éléments de portée (13) qui sont montés de façon déplaçable dans un cadre (3) pour permettre le déplacement dudit cylindre mobile par rapport à l'autre cylindre (8 ou 10), en ce que lesdits éléments de portée déplaçables peuvent venir en contact avec des surfaces d'appui (17) de sorte que lesdits éléments de portée maintiennent le cylindre mobile (10 ou 8) dans une position de travail (FL) par rapport audit autre cylindre (8 ou 10), et en ce que le système de coin (18) est agencé pour coincer les éléments de portée (13) par rapport au cadre (3) lorsque lesdits éléments de portée sont en contact avec lesdites surfaces d'appui (17).

5. Dispositif de traitement suivant la revendication 4, caractérisé en ce que le système de coin (18) comprend au moins un coin (19) qui est insérable entre un élément de portée (13) et le cadre (3) et qui est déplaçable vers les surfaces d'appui (17) de sorte que le coin peut presser l'élément de portée contre lesdites surfaces d'appui et coincer ledit élément de portée dans cette position (FL).

6. Dispositif de traitement suivant la revendication 4 ou 5, caractérisé en ce que le cadre (3) comporte une ouverture (12) pour chaque élément de portée (13), ledit élément de portée étant déplaçable dans cette ouverture, et en ce que le coin (19) est placé dans cette ouverture d'une manière telle qu'une surface de coin (23) est en contact avec un côté ou une surface (21) de ladite ouverture et une autre surface de coin (22) est en contact avec l'élément de portée (13).

7. Dispositif de traitement suivant une quelconque des revendications 4 à 6, caractérisé en ce que la position de travail (A) du cylindre mobile (10 ou 8) par rapport à l'autre cylindre (8 ou 10) est réglable par déplacement des surfaces d'appui (17) pour l'élément de portée (13) de façon à les rapprocher ou les éloigner du dit autre cylindre.

8. Dispositif de traitement suivant la revendication 7, caractérisé en ce que les surfaces d'appui (17) sont définies par un ou plusieurs éléments d'appui mobiles (29,30) en forme de coins, ces surfaces de coin (31) étant en contact avec des surfaces de cadre (32) qui sont inclinées par rapport au premier cylindre (10 ou 8) d'une manière telle que les surfaces d'appui (17) définies par les éléments d'appui (29,30) pour l'élément de portée (13) se rapprochent ou s'éloignent de l'autre cylindre (8 ou 10) lorsqu'on déplace lesdits éléments d'appui le long des surfaces de cadre (32).

9. Dispositif de traitement suivant la revendication 7 ou 8, caractérisé en ce qu'un élément d'appui (29) pour un élément de portée (13) et un élément d'appui (30) pour un autre élément de portée (13) sont déplaçables simultanément au moyen d'axes de réglage (37,38) et des mêmes distances le long des surfaces de cadre (32).

10. Dispositif de traitement suivant la revendication 2, caractérisé en ce que le système à air comprimé (24) coopère par l'intermédiaire d'un système de levier (25) avec un coin (19) faisant partie du système de coin (18), de sorte que ledit système de levier peut presser fortement ledit coin à une position de coincement (KA) et le retirer de ladite position de coincement.
